# EUROPEAN PATENT SPECIFICATION

(11) **EP 2 254 696 B1**
(45) Date of publication and mention of the grant of the patent: **23.09.2015**
(21) Application number: 09710168.7
(22) Date of filing: 13.02.2009
(51) Int. Cl.: G01N 30/72, B01J 20/26, B01J 20/32, B01J 20/30, B01J 20/285, B01J 20/283, B01J 20/284, B01J 20/289

(54) **IMPROVED CHROMATOGRAPHY RESIN, AND METHODS AND DEVICES RELATED THERETO**
VERBESSERTES CHROMATOGRAPHIEHARZ UND ZUGEHÖRIGE VERFAHREN UND VORRICHTUNGEN
RÉSINE CHROMATOGRAPHIQUE AMÉLIORÉE ET PROCÉDÉS ET DISPOSITIFS S'Y RAPPORTANT

(30) Priority: 14.02.2008 EP 08151450; 14.02.2008 US 28609
(43) Date of publication of application: 01.12.2010
(73) Proprietor: R-Biopharm Rhône Ltd, Glasgow, Scotland G20 OXA (GB)
(72) Inventor: RHEMREV-BOOM, Maria Martha, NL-7948 LV Nijeveen (NL)
(74) Representative: Srinivasan, Ravi Chandran
(86) International application number: PCT/NL2009/050067
(87) International publication number: WO 2009/102207

(56) References cited:
- WO-A-01/58561
- WO-A-2006/008143
- US-A1- 2005 029 196
- ALEX BERHITU, EMILE KOSTER: "How to determine matrix effects and extraction recovery in online solid-phase extraction-liquid chromatography-mass spectrometry" ASMS 2007, [Online] 8 June 2007 (2007-06-08), XP002488408 Retrieved from the Internet: URL:http://www.sparkholland.com/index2.asp ?page=http://www.sparkholland.com/content/ content.asp?submenu_id=39> [retrieved on 2008-07-16]

## Description

The invention relates to the field of analytical and preparative chemistry. Among others, it relates to an improved chromatographic resin and to means and methods involving use of the resin for the (on-line) clean up of complex test samples, such as biological samples.

Due to its high specificity, high sensitivity and ability to provide structural information, mass spectrometry has been used increasingly in various technical fields, including pharmaceutical, clinical and biochemical applications. The combination of MS with a chromatographic analytical technique, such as high pressure liquid chromatography (HPLC) can provide a wealth of information in a relatively short time. However, as of today, test sample preparation prior to such qualitative and quantitative analysis is still a laborious task. It usually comprises many steps and is responsible for a significant part of deviations in analytical data. A way to (partly) circumvent this is the use of on-line solid phase extraction (SPE) to reduce the number of sample preparation steps. SPE involves chromatographic separation on a short column with very limited resolution. It serves to roughly isolate the analytes form the major matrix constituents. In on-line fashion, the SPE column is connected directly upstream of the HPLC column, separated by a switching valve to allow bypassing the matrix components to waste, prior to transfer of analytes from SPE column to HPLC column. See for example EP1159597 in the name of the applicant. On-line SPE is also described by Alex Berhitu and Emile Koster in "How to determine matrix effects and extraction recovery in online solid-phase extraction-liquid chromatography-mass spectrometry", ASMS 2007, XP002488408.

For the analysis of biological test samples with these techniques, however, it was found that the MS signal may still be disturbed due to suppression of analyte ionization in the MS detector caused by residual non-volatile matrix components, such as small proteins, peptides and salts.

In order to solve this problem, other, more selective modes of SPE have been investigated in the art. Affinity and immunoaffinity SPE are by far the most powerful selective separation techniques to selectively isolate, concentrate and purify target compounds out of a complex test sample. It potentially enables sample preparation in one single step. Its selectivity is derived from a ligand that is attached to a solid support (media, resin, particle, etc.), which ligand selectively recognises the target analyte. Ideally, a test sample comprising a mixture of components, among others the target analyte, is passed through an (immuno)affinity column and separated into two fractions. The first fraction does not bind to the solid support and elutes at k' = 0, whereas the second portion, ideally containing only the analyte of interest, is recognised and absorbed by the ligand. By changing the characteristics of the mobile phase, e.g. changing pH, salt content and/or other parameter, the second portion can be eluted from the solid phase. Especially when used in combination with other modes of chromatography, for instance high pressure liquid chromatography, (immuno)affinity SPE thus enables a very selective and efficient sample cleanup and, as a result, a very short analysis time per test sample.

However, despite its potential and the availability of a large variety of ligands for many target analytes, only very few applications of (immuno)affinity based SPE have been reported to be used in combination with other modes of chromatography as of today. In addition, the theoretically very powerful and hence desirable combination of (immuno)affinity sample preparation with a chromatographic separation followed by MS detection has hardly been reported, presumably due to the fact that the conventional non-volatile buffers used during these type of separations are not MS compatible. Cai et al. (Anal. Chem. Vol. 68, 1996, pp. 72-78) report an on-line immunoaffinity extraction-coupled column capillary liquid chromatography/tandem mass spectrometry method, involving a protein G immunoaffinity column with noncovalently immobilized antibody specific to the analytes of interest.

Furthermore, it has to be emphasized that in general most rigid solid phase supports used for on-line immuno-affinity SPE still demonstrate some nonselective adsorption of matrix constituents that still cause ion suppression in the MS detector. The present inventors realized that, in order to allow the combined application of (immuno)affinity SPE with the highly sensitive and selective MS detectors, with/without the combination with other modes of chromatography, the SPE resin has to meet specific criteria. As already stressed, for the applications meant here, a major criterion is the low non-selective adsorption and/or interaction towards non-target matrix components. Furthermore, the resin should be chemically and physically stable, possess good mechanical strength to allow high flow rates and withstand the high pressures normally used during high pressure liquid chromatography. In addition, the immobilisation of ligands of interest to the resin should preferably be such that i) a high ligand accessibility is achieved and ii) the properties of the ligand are not destroyed during chemical immobilization.

A wide variety of solid phase supports, organic and inorganic polymers are available, which might be used for the design of these solid phase supports, each with its own advantages and disadvantages. Among the first materials introduced and widely accepted solid phase supports are the crosslinked, natural polysaccharides, such as agaroses, saccharoses, celluloses and dextranes. These materials are stable over a wide pH-range, possess abundant hydroxyl groups for activation to allow coupling of ligand under physiological conditions and have low non-selective adsorption properties. However, these materials are excluded from usage in high pressure applications due to their poor mechanical strength and solvent dependent swelling.

Supports based on synthetic organic polymers, like polyacrylamide, polyacrylate, polymethacrylate, polyvinyl and polystyrene polymers and derivatives thereof, depending on their amount of crosslinking, demonstrate a much better mechanical strengths. For the purpose meant here, however, the non-selective adsorption was found to be still too high to e.g. allow easy coupling with MS detection and achieve the required sensitivity. Inorganic polymers, such as silica, alumina and zirconia, which are well known for their high mechanical strength, demonstrate high nonselective adsorption properties. This is regarded to be due to their enormous adsorptive properties and/or in relation to their generally high surface areas.

In view of the above, it is an aim of the present invention to provide a chromatographic resin that has a good mechanical stability combined with a very low non-selective absorption. Preferably, the resin allows for covalent coupling of a ligand under physiological conditions (pH, salt strength etc.) and is compatible with volatile buffers suitable for MS analysis.

It was surprisingly found that the above aims can be met by the provision of a special rigid solid support (chromatographic resin) that is chemically modified with a small, non-polymeric hydrophilic molecule to form a hydrophilic surface, which surface a) reduces nonspecific binding and b) allows for very efficient coupling of a ligand to the solid support.
Specifically, the present invention provides:
- A chromatographic resin suitable for use in high pressure affinity chromatography, the resin comprising a rigid organic polymer and the resin having a hydrophilic surface, characterized in that the hydrophilic surface is formed by a multiplicity of covalently bound small non-polymeric hydrophilic compounds having a molecular weight less than 1000 Dalton and wherein the resin does not contain a hydrophilic coating formed by a polymeric structure;
- A method for providing a chromatographic resin of the present invention, the method comprising the step of forming a non-polymeric hydrophilic surface by reacting a rigid organic polymer with at least one non-polymeric hydrophilic compound having a molecular weight less than 1000 Dalton;
- A chromatography column comprising a resin of the present invention;
- An apparatus comprising a chromatography column of the present invention in fluid communication with an analytical system, preferably wherein said apparatus comprises a solid-phase extraction (SPE) system integrated with a liquid chromatography (LC) system, preferably a high pressure liquid chromatography (HPLC) system; and
- Use of a resin of the present invention in an analytic method for analyzing a test sample comprising solid phase extraction, preferably wherein the method comprises mass spectroscopic (MS) detection of at least one analyte in the sample.

The resin may be in the form of particles.

As will be exemplified herein below, a resin of the invention is characterized by a hydrophilic surface which is formed by a multiplicity of covalently bound small hydrophilic compounds. The hydrophilic groups of the compounds contribute to a very low nonselective binding of the material, and further allow for efficient coupling of ligand to the material. Since only part of the hydrophilic moieties is provided with ligand, they rend the surface of the polymer hydrophilic. Because of its unique combination of high mechanical strength and very low nonselective absorption, the resin as provided herein is advantageously used in high throughput (immuno) affinity chromatography, in particular (on-line) sample pretreatment by solid phase extraction.

It is known in the art to provide a solid support material with a hydrophilic surface. However, the agents used in the art to obtain such hydrophilic surface are always large, polymeric molecules. For instance, WO 01/58561 and US 2005/092196 disclose the use of water-soluble, flexible hydrophilic polymers like polyethyleneminine to modify the surface of an inorganic polymer support material. EP-0295073-A2 discloses a non-ionic hydrophilic spacer interposed between a solid support and an affinity ligand to allow for enhanced steric access by bound affinity ligands to macromolecules. According to EP-0295073-A2, the spacer is any polymer of subunits which when polymerized produces a spacer containing polar but non-ionized moieties which renders the spacer hydrophilic, such as polyethylene glycol (PEG), polyvinyl alcohol (PVA) etc. Most preferably, the spacer has about 90-100 atoms. EP-0621074-A1 teaches an affinity support based on a perfluorocarbon carrier that is coated with a crosslinked hydrophilic polymer, preferably PVA.

Prior the present invention, it was generally believed in the art that the large hydrophilic surface area provided by a coating of hydrophilic polymers was responsible for the reduced non-specific binding. Therefore, preference has thus far always been given to highly complex, cross-linked hydrophilic structures. The present inventors however surprisingly observed that the use of small, non-polymeric hydrophilic molecules has clear advantages over the use of large, polymeric hydrophilic structures known in the art. It was found that the larger the molecular weight of the hydrophilic compound, the higher the nonselective absorption. Most chromatographic support materials derive their large surface area (and hence binding capacity) from their porous structure. They are usually available in different pore sizes, depending on the specific application. For instance, support material with small pores (e.g. 60 Å) may be used for the separation of small molecules ranging from 100-1000 Dalton. The separation of biomolecules, most of which are in the range of 15 to 250 kDa and higher), resins with a much larger pore size are required, like 300 to 2000 Å. Separations based on immunoaffinity which involve the coupling of an antibody (roughly 150 kD) to the resin, require such large pores to allow for a sufficient binding capacity. It must be noted that not all pores have the prescribed large pore size, and the smaller pores are thought to be at least in part responsible for the nonspecific binding in case large polymeric molecules are employed to make the resin surface more hydrophilic. Besides the fact that small analytes (both the analyte of interest as well as those causing nonselective binding) generally demonstrate higher diffusion constants compared to these polymeric hydrophilic materials, these small analytes can also penetrate more easily into these smaller pores, whereas the polymeric hydrophilic materials will have only limited or no access into these smaller pores Without wishing to be bound by any theory, it is believed that the higher diffusion rate of the non-polymeric compound according to the invention allows for a more efficient modification of the surface. In addition, the porous cavities of the polymer support are much better accessible for a small hydrophilic compound employed in the present invention as compared to a large polymeric structure used in the art, like dextranes, PEG or PVA. This difference results in a larger effective hydrophilic surface area and thus in an improved nonselective binding character of the support.

The term "non-polymeric" as used herein is primarily intended to indicate that the hydrophilic compound is not made up from repeating structural units. In fact, it can be considered as a unique, single structural unit. The molecular weight of the small non-polymeric hydrophilic compound, i.e. when considered as a separate molecule and not including the solid phase support nor a ligand attached to it, is less than about 1000 Dalton, preferably less than 500 Dalton. Thus, the present invention is clearly distinguished from the prior art solely disclosing a support provided with a hydrophilic coating formed by a polymeric structure. In one embodiment, the non-polymeric hydrophilic compound has 1-10 C-atoms. In particular, a method of the invention comprises reacting the polymer with a hydrophilic compound of the general formula CₙHₘ(Y)ₖ, wherein n is an integer from 1 to 10, preferably 2 to 8; m ≤ 2n; k ≤ 3n, and wherein Y is a hydrophilic moiety, preferably wherein Y is -OH or -COOH.

The invention can be practiced with any type of organic polymer that is rigid and stable enough to withstand a high pressure, preferably up to about 200, more preferably about 300 bar. In one embodiment, the organic polymer is a polymer selected from the group consisting of polyacrylamides, polyacrylates, polymethacrylates, polyvinyl, polystyrene, and derivatives thereof. These include polymers and copolymers of 2-hydroxyethyl methacrylate (HEMA), methyl methacrylate (MMA) and ethyleneglycol methacrylate (EDMA). Particularly suitable are HEMA (co)polymers. The resin may have a porous surface. The pore size may range from about 50 to 3000 Å. As indicated herein above, the use of small hydrophilic compounds is of particular advantage for reducing the non-selective binding properties of a resin having relatively large pores (e.g. 300 to 1000 or 300 to 2000 A) for use in immunoaffinity separations.

To improve the reactivity between polymer and said at least one hydrophilic compound, a method may comprise, prior to reacting the polymer with the at least one hydrophilic compound, a step of activating said polymer and/or said hydrophilic compound. Depending on the type of polymer and hydrophilic compound used, it may be desirable to activate either one or both of the reactants. Of course, in cases where the reactivity between polymer and hydrophilic compound as such is sufficient, no activation is required. The skilled person will be able to decide whether activation is desirable, and if so, which activation chemistry to apply. Activation of polymer and/or hydrophilic compound is readily achieved by providing the polymer and/or the hydrophilic compound with one or more reactive group(s) known to enhance the reactivity between both reactants. Thus, complementary (i.e. reactive) chemistries known in the art can be achieved by introducing functional moieties on solid phase support and/or hydrophilic compound. Exemplary reactive groups include -NH₂, -OH and CH=CH₂. These can be introduced by standard methods. For instance, amine reactive chemistries can be introduced using NHS (N-hydroxysuccinimide esters)-, CDI- (carbonyl diimidazole)- and/or EDC- (1-ethyl-3-(3-dimetylaminopropyl)carbodiimide), reductive amination by introducing -CHO-moieties, FMP- (2-fluoro-1-methylpyridinium toluene-4-sulfonate), Tresyl- and/or Tosyl-chloride-activation. Hydroxy reactive chemistries can be introduced through epoxy-activation. Polymerisation reactive chemistries, such as vinyl groups, can be introduced through the use of monomers of acrylate- and/or methacrylate-derivatives.

It will be understood that the concept of the present invention can be put into practice using a wide variety of (activated) small hydrophilic molecules. Exemplary methods involve reacting a polymer with at least one compound selected from the group consisting of ethanolamine, 3-amino-1,2-propanediol, N-(hydroxymethyl)acrylamide, 3-allyloxy-1,2-propanediol, N-[Tris(hydroxymethyl)methyl]acrylamide and glycidol. Combinations of two or more distinct hydrophilic compounds may also be used.

The resin of the present invention may further comprise one or more ligands attached to the above-described rigid polymer via a hydrophilic compound attached to the polymer. To that end, the chromatographic resin having a hydrophilic surface can be reacted with at least one ligand to allow for covalent attachment of said at least one ligand to the resin via said at least one non-polymeric hydrophilic compound.

The ligand may be any molecule or molecule fragment capable of binding to another moiety or molecule-based analyte, e.g., binding through hydrophobic interaction, covalent bonding or Columbic interaction. Such ligands are well known to those skilled in the art of (bio)affinity chromatography. Ligands typically used in the bioseparations industry include biotin, avidin, streptavidin, natural or unnatural protein, peptide, antigen and nucleic acid. In the present invention, the ligand is preferably a biological or synthetic molecule, preferably a protein or peptide, such as a (monoclonal) antibody or a receptor.

In a specific embodiment, the ligand is an antibody capable of selectively binding one or more steroid hormones from a complex mixture. Steroid hormones include, but are not limited to, estradiol, estrone, ethynylestradiol, testosterone and nortestosterone. In this embodiment, complex mixtures may include, but are not limited to, tap water, ground water, process waters, environmental samples like ground, sludge, surface waters in general and surface waters containing possible pharmaceutical contamination in particular, pharmaceutical formulations, human and animal biological fluids (such as serum and urine), and other biological samples (e.g., animal tissue, biological samples, etc.). Other exemplary applications of the present invention can be found in the food and beverage industry. For example, a resin as provided herein may be used for the detection of undesirable components in food or food sources. In one specific aspect, a hydrophilic resin according to the invention is used for detecting (myco)toxins in cereals, e.g. in an on-line immunoaffinity SPE column.

Another specific application of the present invention relates to quantitation of therapeutic compounds in a human sample. A resin of the invention, functionalized with one or more ligands capable of specifically recognizing the drug(s) or metabolites thereof, is suitably used for on-line solid-phase extraction (clean up) of the sample followed by subsequent target analyte analysis, e.g. using liquid chromatography-tandem mass spectrometry (e.g. SPE-LC-MS/MS). No additional tedious and time-consuming sample preparation steps such as protein precipitation, centrifugation, and pipetting need to be performed for sample clean up. As an example, retroviral drugs in human plasma, such as inhibitors (PI) and non-nucleoside reverse transcriptase inhibitors (NNRTI), may be quantified in a rapid, sensitive and fully automated fashion. Accordingly, a resin of the invention is perfectly appropriate for routine therapeutic drug monitoring e.g. of plasma samples of HIV/AIDS patient or patient receiving anti-depressants.

As will be appreciated by the person skilled in the art, a method of the invention may involve the exemplary and preferred polymers, hydrophilic compounds and/or ligands as described above. The Examples below describe the preparation of various activated resins of the invention, involving activation of polymer and/or hydrophilic compound via various activation chemistries.

Following the activation of a rigid polymer with hydrophilic compounds, several types of chemistries may be used for covalent attachment of (biological) ligands. Thus, in a method of the invention the preparation of an activated hydrophilic resin is preferably followed by the step of reacting it with at least one ligand to allow for covalent attachment of said at least one ligand to the solid phase support via said hydrophilic compound. According to the invention, the ligand is not attached directly to the surface of the rigid polymer but indirectly through covalent binding to the hydrophilic compound. The hydrophilic, e.g. -OH or -COOH, groups of the hydrophilic compound can be used or modified by methods known in the art to create reactive sites for ligand binding. In general, there will be an excess of reactive sites on the hydrophilic compound that are available for ligand binding. Accordingly, not all hydrophilic compounds have to be provided with ligand. Ligand may be attached to the hydrophilic compound in a direct or indirect fashion, for example via a spacer molecule between the activated resin and the ligand. The use of spacers is known in the art. Preferred spacers are hydrophilic spacers since these will avoid any negative influence on the non-selectivity of the resin.

Exemplary embodiments of methods for functionalizing an activated resin according to the invention can be schematically depicted as follows wherein X-Z is the activated resin, X being a rigid polymer provided with Z, representing the hydrophilic compound.

| | |
|---|---|
| 1. without spacer: | a. X-Z + A = X-Z-A (A allows for coupling of ligand under physiological conditions) |
| | b. X-Z-A + ligand = X-Z-ligand + A |
| | |
| 2. with spacer | a. X-Z + A1 = X-Z-A1 (A1 allows for coupling of spacer) |
| | b. X-Z-A1 + S = X-Z-S + A1 (S = spacer) |
| | c. X-Z-S + A2 = X-Z-S-A2 (A2 allows for coupling ligand under physiological conditions; A2 may be the same as or different from A1 e.g. amine, hydroxy, epoxy, carbonic acid or carbonyl). |
| | d. X-Z-S-A2 + ligand = X-Z-S-ligand + A2 |

The invention also provides a chromatographic resin obtainable by a method according to the invention. The resin is preferably a functionalized resin comprising at least one ligand, e.g. an antibody, capable of specifically binding an analyte of interest. Another aspect relates to a chromatography column comprising a resin as provided herein, for example an affinity column comprising a resin in the form of particles, wherein each particle comprises a rigid polymer whose surface is activated with hydrophilic compounds, and wherein at least part of the hydrophilic compounds carry one or more ligands. In view of the high mechanical stability of the resin, the column may be a high pressure resistant column. In a preferred embodiment, the invention provides a solid phase extraction (SPE) cartridge comprising a resin of the invention. Because of its very low nonselective binding properties, an SPE cartridge of the invention is very suitable for affinity SPE. Preferably, the cartridge is an online SPE cartridge, e.g. suitable for use in Symbiosis™/ Prospekt-2 systems (Spark Holland BV, Emmen, The Netherlands).

The online SPE cartridge can be specially designed for on-line elution to the HPLC column. Dimensions are optimized to combine high extraction capacity with small elution volumes. Standard dimensions are 10 mm in length and 2 mm inner diameter, but 10 x 1 mm is also envisaged. Preferably the cartridge will resist typical HPLC system pressure (max. 400 bar). A cartridge may be marked with a code representing brand, type and batch of the SPE resin. Further, the cartridges may be delivered in multi (e.g. 96) position-plates that are placed directly in the HPLC system (e.g. Symbios™ /Prospekt-2 System) for processing, thereby avoiding the need to touch a cartridge. Typically, every tray contains a reference chip that transmits information on cartridge type, batch number, production number (unique), and/or expiry date etc. to the HPLC system. This information is displayed on the PC screen and is attached to the analysis report. After use, the HPLC System transmits data to the chip on positions used/not used. Partially used trays can thus be stored safely without labeling or removing the used cartridges.

Also provided is an apparatus comprising a chromatography column according to the invention in fluid communication with an analytical system. The apparatus for instance comprises a solid-phase extraction (SPE) system integrated with a liquid chromatography (LC) system. The apparatus may furthermore comprise a detector, such as a (tandem) mass spectrometer or a fluorescence detector. Accordingly, there is also provided an analytical method for analyzing a test sample, said method comprising contacting said sample with a resin according to the invention. A further aspect relates to the use of a resin provided herein in an analytical method for analyzing a test sample. The method involves solid phase extraction (SPE), preferably on line SPE, using the resin. In view of the resin being compatible with volatile buffers, the method may include mass spectroscopic (MS) detection of at least one analyte in the sample.

An apparatus or analytical method of the invention is attractive for use in various areas, including pharmacy and drug development. Efficient drug development rapidly increases the numbers of drug candidates and therefore the number of samples. LC-MS has become the predominant tool for bioanalysis due to its universal applicability and great help in lab automation. Traditional sample preparation techniques were not evolved equally, which hampers streamlining the lab organization. Use of a resin of the invention in online (immuno)affinity extraction fully integrated with LC (XLC) permits direct injection of raw biological samples without prior filtration, protein precipitation, and centrifugation.
The invention is exemplified in the Examples below
The examples describe the preparation of a rigid hydrophilic solid phase support (chromatographic resin) which can then be activated in order to allow the covalent coupling of ligands of interest under physiological conditions and be used for the purpose of (immuno)affinity chromatography in combination with other modes of chromatography followed by MS detection.

This rigid hydrophilic solid phase support comprises the core base support X (X = a rigid solid phase support, based on organic [according to the present invention] and inorganic polymers [reference only], like polyacrylamide, polyacrylate, polymethacrylate, polyvinyl and/or polystyrene polymers and derivatives thereof, silica, alumina and/or zirconia and derivatives thereof, which is reacted with Z (Z is for example - NH₂, -OH, -epoxy, -C(H)=O, -C(H)=C(H)₂, via complementary corresponding activation chemistries, such as amine reactive chemistries like NHS (N-hydroxysuccinimide esters)-, CDI-(carbonyl diimidazole)- and/or EDC- (1-ethyl-3-(3-dimethylaminopropyl)carbodiimide), reductive amination by introducing -CHO-moieties, FMP- (2-fluoro-1-methylpyridinium toluene-4-sulfonate), Tresyl- and/or Tosyl-chloride-activation respectively hydroxy reactive chemistries such as epoxy-activation and polymerisation reactive chemistries, such as vinyl groups through the use of monomers of acrylate- and/or methacrylate- derivatives) and allowing the functionalization of rigid core base support with a hydrophilic compound.

By coupling compounds with abundant hydrophilic, e.g. hydroxyl or carboxyl, groups onto the surface of supports, not only the hydrophilicity of the solid phase support is significantly enhanced (e.g. improvement of nonselective behavior), a large variety of chemistries are then available to allow the coupling of ligands under physiological conditions. For this reason, a variety of chemical coatings were tested and examined on their improvement of nonselective adsorption characteristics. Next, a variety of activation chemistries (with or without the application of a spacer) to allow the chemical coupling of ligands of interest under physiological conditions were tested by analysing the capacity of the functionalized solid phase support for the target analyte. Next, the MS compatability was investigated by using both conventional and a variety of volatile buffer solutions during the combined use of immunoaffinity SPE, high pressure liquid chromatography followed by MS detection.

### EXAMPLE 1: IMPROVEMENT OF NONSELECTIVITY

To improve the nonselectivity of a solid phase support, a variety of hydrophilic compounds were chemically coupled onto several supports, using a variety of activation chemistries:

### A. Inorganic polymers (Reference only)

### A.1. Silica through NH2-activation:

### A.1.1. Activation of solid phase support

1 gram of silica is washed with respectively 0.05 M HCl, water (3-times) and toluene by stirring during 1 hour at room temperature in a rotary evaporator under vacuum. The silica is silanized with 1 ml of 3- aminopropyltrimethoxysilane in 10 ml of toluene by stirring in a rotary evaporator during 24 hours at room temperature. The silanized silica is washed with 3x20 ml of toluene and ether and dried during 4 hours at 120°C.

### A.1.2. Coupling of hydrophilic compounds

The following hydrophilic compounds were used to couple:
a. Polyethylene glycol 200 (PEG 200) (comparative Example)
b. Maltose (360 Dalton) (according to the invention)
c. Dextrane (10.000 Dalton) (comparative Example)

Prior to coupling, the hydrophilic compounds were activated via N,N'-carbonyl diimazole (CDI) (0.05 mM - 2.5 mM hydrophilic compound plus 2.5 mM CDI in 2.5 ml of dry aceton was stirred for 1 hour at room temperature), 2-fluoro-1-methylpiridinium tolunene-4-sulphonate (FMP) (0.05 mM - 2.5 mM hydrophilic compounds plus 5 ml of 0.35 mM FMP in DMSO, containing 1% triethylamine, was stirred for 15 minutes), N,N-disuccinimidylcarbonate (NHS) (0.05 - 2.5 mM of hydrophilic compound plus 0.3 mM NHS in 1 ml of DMSO and add under vigorously stirring 5 ml of 7.5% triethylamine in dry pyridine and stirr for another 1 hour at room temperature) or Tresyl chloride (0.05 - 2.5 mM hydrophilic compound in 5 ml of DMSO and add under vigorously stirring 1 ml of a mixture of tresyl chloride / pyridine / DMSO 1:10:89 and stirr for another 15 minutes at room temperature).

Coupling of the individual activated hydrophilic compounds towards the aminopropyl silanized support was performed as follows:
a. CDI-activated compounds: stirring for 16 hours at room temperature;
b. FMP-activated compounds: stirring for 16 hours at room temperature in 10 ml of 0.2 M phosphate buffer pH 7.0;
c. NHS-activated compounds: stirring for 16 hours at room temperature in 3 ml of DMSO;
d. Tresyl chloride activated compounds: stirring for 16 hours at room temperature in 5 ml of 0.2 M phosphate buffer pH 7.0.

### A.2. Silica through epoxy-activation:

### A.2.1. Activation of solid phase support

1 gram of silica is washed with respectively 0.05 M HCl, water (3-times) and toluene by stirring during 1 hour at room temperature in a rotary evaporator under vacuum. The silica is silanized with 3 ml of γ-glycidoxypropyltrimethoxysilane in 10 ml of toluene by stirring in a rotary evaporator during 24 hours at room temperature. The silanized silica is washed with toluene, ether and dioxane.

### A.2.2. Coupling of hydrophilic compounds

The following hydrophilic compounds were used to couple:
a. Maltose (360 Dalton) (according to the invention)
b. Dextrane (10.000 Dalton) (comparative Example)

Due to the fact that epoxy-groups directly react with hydroxy-groups, no further activation was necessary. Coupling of the individual hydrophilic compounds towards the glycidoxypropyl silanized support was by adding 0.05-2.5 mM of hydrophilic compound to 1 gram of glycidoxypropyl silanized support in 5 ml of dry dioxane, containing 100 µl of BF3 etherate. The reaction was allowed to proceed for 24 hours at room temperature in the dark.

### A.3. Silica through methacryl-activation:

### A.3.1. Activation of solid phase support

1 gram of silica is washed with respectively 0.05 M HCl, water (3-times) and toluene by stirring during 1 hour at room temperature in a rotary evaporator under vacuum. The silica is silanized with 9 ml of γ-methacryloxypropyltrimethoxysilane in 10 ml of toluene by stirring in a rotary evaporator during 24 hours at room temperature. The silanized silica is washed with toluene and dimethylformamide.

### A.3.2. Coupling of hydrophilic compounds

The following hydrophilic compounds were used to couple:
a. Methacrylated dextrane (Dextrane-MA) (16.000 Dalton, where 13 out of 100 sugarmolecules contain a methacrylate group) (comparative example)
a. N-(hydroxymethyl)acrylamide (HM-MA)
b. 3-allyloxy-1,2-propanediol (DP-MA)
c. N-[Tris(hydroxymethyl)methyl]acrylamide (TRIS-MA)
d. Methylacrylate (MA)

Coupling was performed by adding respectively 0.6 gram of HM-MA, DP-MA or Tris-MA in 5 ml of ethanol respectively 12 ml of 5 %w/w methacrylate activated dextrane in DMSO towards 1 gram of methacryl-silanized silica. The reaction is allowed to proceed overnight at 75 °C in the presence of 15 mg of α,α'-azoisobutyronitrile. After coupling MA, the ester was saponificated by stirring in boiling 1 N HCl in water for 4 hours.

### B. Organic polymers

### B.1. Chloromethyl styrene polymer

A chloromethylstyrene polymer, prepared by dispersion polymerisation of 4-Chloromethylstyrene in ethanol, was used for these experiments.

### B.1.1. Coupling of hydrophilic compounds

Due to the fact that the chloromethyl-group directly reacts with primary amines, no further activation was necessary. The chloromethyl-group of the solid phase support was reacted with ethanolamine in water during stirring for 24 hours at room temperature, followed by 2 hours at 50°C.

### B.2. Hydroxymethyl styrene copolymer (Reference only)

The copolymer solid phase support hydroxymethyl styrene polymer was prepared by dispersion polymerisation in ethanol of the monomers hydroxymethyl-methacrylamide and styrene. This solid phase support was directly tested for its nonselectivity.

### B.3. Glycidyl styrene copolymer

The copolymer solid phase support glycidyl styrene copolymer was prepared by dispersion polymerisation in ethanol of the monomers glycidylmethacrylate and styrene.

### B.3.1. Coupling of hydrophilic compounds

The following hydrophilic compounds were used to couple:
e. Water
f. Dextrane (10.000 Dalton) (comparative example)

Due to the fact that the epoxy-group of the glycidyl-monomer directly react with hydroxy-groups, no further activation was necessary. Coupling of the individual hydrophilic compounds was by adding 0.5 mM of hydrophilic compound to 1 gram of solid phase support in 10 ml of 0.1 M borate buffer pH 13.0. The reaction was allowed to proceed for 3 days hours at room temperature.

### B.4. Hydroxyethyl methacrylate copolymer

### B.4.1. Plain hydroxyethyl methacrylate copolymer

This solid phase support was directly tested for its nonselectivity without further modifications.

### B.4.2. Modification with glycidol

The solid phase support was reacted with glycidol by adding 1 gram of glycidol towards 1 gram of stationary phase, which was suspended in 5 ml of 1 N sodium hydroxide, containing 100 mg of NaBH₄. The mixture was allowed to react overnight at room temperature. This solid phase support was directly tested for its nonselectivity without further modifications

### B.4.3. Activation of solid phase support with CDI

1 gram of support was activated by adding 0.4 gram of CDI, dissolved in 5 ml of dry aceton. The reaction was allowed to react during 90 minutes at room temperature.

### B.4.4. Coupling of hydrophilic compound

The activated support obtained under B.4.3. is reacted with 3-aminopropanediol (Amino-DP) (hydrophilic compound) by adding 1 ml of hydrophilic compound in 5 ml of DMSO towards 1 gram of activated support. The reaction is allowed to react overnight at room temperature.

The nonselectivity of the supports obtained was tested by static adsorption tests of solutions containing small amounts of nortestosterone (NOR) (500 ng/ml in water. The supernatant was analyzed by HPLC on the content of nortestosterone. The results are given in Table 1.

The results of experiment A.1. show that, in order to improve the nonselectivity of the solid phase support, surface modification with small non-polymeric hydrophilic compounds havingabundant hydroxyl groups significantly decreases the nonselectivity, whereas modification with hydrophilic polymers, such as PEG and dextrane, still demonstrate unacceptable aspecific adsorption of small apolar compounds, such as nortestosterone. Furthermore, coupling of hydrophilic compounds via Carbonyl diimidazole demonstrated the best coupling yields. This activation chemistry generally performs stable coupling without adding additional functionalities, which can influence the properties (amongst the polarity) of the support.

From the results of experiment A.2. and A.3 it can be concluded that activation of the solid phase support via epoxy-groups respectively methacryl-groups generally improves the coupling yield of hydrophilic compounds containing (abundant) hydroxyl-groups respectively methacrylate-groups.

From the results of experiment B1, B2 and B3 it can be concluded, that also for these solid phase supports good results are obtained when small compounds with abundant hydroxyl groups are coupled. The same is true when hydroxyethyl methacrylate is used as solid phase support. In this case good results are obtained when the solid phase support is directly modified via an epoxy-activated hydrophilic compound and/or activation of the solid phase support via CDI and coupling of small hydrophilic compounds.

In conclusion, the chemical coupling of small hydrophilic components significantly improves the non-selectivity of solid phase supports.

**Table 1: Nonselectivity of various supports prepared in Example 1**

| Support | Activated Support | Hydrophilic Compound | Activated Hydrophilic Compound | Nonselectivity (% recovery) |
|---|---|---|---|---|
| Experiment A.1. | | | | |
| Silica | - | - | - | 31 * |
| Silica | -NH2 | None | Not | 31 * |
| Silica | -NH2 | PEG200 | CDI | 55 * |
| Silica | -NH2 | PEG200 | FMP | 53 * |
| Silica | -NH2 | PEG200 | NHS | sticky * |
| Silica | -NH2 | PEG200 | Tresylchloride | 30 * |
| Silica | -NH2 | Maltose | CDI | 65 * |
| Silica | -NH2 | Maltose | FMP | 42 * |
| Silica | -NH2 | Maltose | NHS | 37 * |
| Silica | -NH2 | Maltose | Tresylchloride | 49 * |
| Silica | -NH2 | Dextrane | CDI | 56 * |
| Silica | -NH2 | Dextrane | FMP | 56 * |
| Silica | -NH2 | Dextrane | NHS | 42 * |
| Silica | -NH2 | Dextrane | Tresylchloride | 40 * |

| Experiment A.2. | | | | |
|---|---|---|---|---|
| Silica | Epoxy | Maltose | Hydroxy | 91 * |
| Silica | Epoxy | Dextrane | Hydroxy | 85 * |

| Experiment A.3. | | | | |
|---|---|---|---|---|
| Silica | Methacryl | Dextrane | Methacryl | 53 * |
| Silica | Methacryl | HM-MA | Methacryl | 83 * |
| Silica | Methacryl | DP-MA | Methacryl | 94 * |
| Silica | Methacryl | Tris-MA | Methacryl | 90 * |
| Silica | Methacryl | MA | Methacryl | >99 * |

| Experiment B.1. | | | | |
|---|---|---|---|---|
| Styrene | - | - | - | 20 * |
| Styrene | Chloromethyl | Ethanolamine | -NH₂ | 91 |

| Experiment B.2. | | | | |
|---|---|---|---|---|
| OHMe-Styrene | - | - | - | 79 * |

| Experiment B.3. | | | | |
|---|---|---|---|---|
| Styrene | Epoxy | Water | Hydroxy | 100 |
| Styrene | Epoxy | Dextrane | Hydroxy | 90 * |

| Experiment B.4. | | | | |
|---|---|---|---|---|
| HEMA | - | - | - | 32 * |
| HEMA | - | Glycidol | Epoxy | 95 |
| HEMA | CDI | Amino-DP | -NH₂ | 94 |

| | | | | |
|---|---|---|---|---|
| *Reference only | | | | |

### EXAMPLE 2 (REFERENCE ONLY): EFFECT OF CROSSLINKER ON NONSELECTIVITY

To examine the effect of the crosslinker, during preparation of the solid phase support hydroxymethyl styrene copolymer (see Example 1, B.2.) via dispersion polymerisation, the crosslinker ethylenedimethacrylate respectively ethyleneglycoldimethacrylate was used. Both solid phase supports were investigated on their nonselectivity as described in Example 1. The results are presented in Table 2.

**Table 2 (Reference only): Effect of crosslinker on nonselectivity**

| **Crosslinker** | **nonselective adsorption (% recovery)** |
|---|---|
| ethylenedimethacrylate | 30% |
| ethyleneglycoldimethacrylate | 95% |

As can be seen from these results, the application of hydrophilic crosslinkers significantly improves the nonselective adsorption characteristics of solid phase supports.

### EXAMPLE 3 (REFERENCE ONLY): EFFECT OF SPACER ON CAPACITY OF AFFINITY SUPPORT

Besides the activation chemistry, the use of a spacer may be crucial for successful interaction between a ligand and the target analyte (in this case an antibody).

Specifically with rigid supports, a spacer molecule may provide greater flexibility and allow the immobilized ligand to move into position to establish the correct binding orientation. However, care should be taken regarding the introduction of apolar sites, and as a result an increase in nonselective adsorption. Hydrophilic spacers are preferred. Furthermore, caution should be taken with respect to endcapping of not reacted spacer molecules; if the ligand contains the same functionalities, the selectivity and/or capacity of the (imumno)affinity support might be altered.

### C.1. Hydroxyethyl methacrylate copolymer

### C.1.1. CDI activation

1 gram of support was activated by adding 0.4 gram of CDI, dissolved in 5 ml of dry acetone. The mixture was allowed to react during 90 minutes at room temperature.

### C.1.2. Reductive amination activation

The solid phase support was reacted with glycidol by adding 1 gram of glycidol towards 1 gram of stationary phase, which was suspended in 5 ml of 1 N sodium hydroxide, containing 100 mg of NaBH₄. The mixture was allowed to react overnight at room temperature. After coupling the support is washed with water, 1 M NaCl and water. Aldehyde groups are formed by reacting the support thus obtained with 20 ml of 0.2 M NaIO₄ for 90 minutes at room temperature. After reaction, the activated polymer is washed with an excess of water.

### C.1.3. Coupling of spacer

A spacer was introduced by coupling diaminodipropylamine (DADPA) by reacting 2 gram of DADPA, dissolved in 5 ml of dry acetone with 1 gram of activated material obtained under C.1.1. during stirring overnight at room temperature.

### C.1.4. Coupling of ligands.

### a. CDI activation - no spacer

Towards the activated support obtained under C.1.1. 20 mg of Protein A was dissolved in 4 ml of cold 0.1 M phosphate buffer pH 7, containing 150 mM of NaCl. The reaction was allowed to proceed for 4 hours at room temperature.

### b. CDI-activation - spacer

The support obtained under C.1.3. was reacted with 2 gram of succinic anhydride in 20 ml of water overnight at room temperature. After washing with, successively, excess of water, 1 M NaCl, water, dry acetone and dry dioxane, the support wass suspended in 5 ml of dry dioxane containing 0.4 gram of CDI and stirred for 1 hour at room temperature. After washing with dry acetone, 20 mg of Protein A, dissolved in 4 ml of cold 0.1 M phosphate buffer pH 7, containing 150 mM of NaCl was added towards the activated support. The reaction was allowed to proceed for 4 hours at room temperature.

### c. Reductive amination - no spacer

Towards the support obtained under C.1.2., 20 mg of Protein A was dissolved in 4 ml of 0.1 M phosphate buffer pH 7, containing 150 mM of NaCl and 320 mg NaCNBH₃. The reaction was allowed to proceed overnight at room temperature.

### d. Reductive amination - spacer

The support obtained under C.1.3. was reacted with glycidol by adding 1 gram of glycidol towards 1 gram of stationary phase, which was suspended in 5 ml of 1 N sodium hydroxide, containing 100 mg of NaBH₄. The reaction was allowed to proceed overnight at room temperature. After coupling, the support is washed with water, 1 M NaCl and water. Aldehyde groups are formed by reacting the support thus obtained with 20 ml of 0.2 M NaIO₄ for 90 minutes at room temperature. After reaction, the activated polymer is washed with an excess of water. After washing with 0.1 M phosphate buffer pH 7, containing 150 mM NaCl, then 20 mg of Protein A, dissolved in 4 ml of 0.1 M phosphate buffer pH 7, containing 150 mM of NaCl and 320 mg NaCNBH₃ was added to the activated support. The reaction was allowed to proceed overnight at room temperature.

The affinity supports thus obtained are tested for their capacity to capture human IgG under physiological conditions. For this purpose static adsorption tests with solutions containing 1 mg/ml of human IgG in 10 mM phosphate buffer, pH 7.4, containing 150 mM NaCl were carried out. The supernatant was analysed on the content of human IgG at UV-VIS 280 nm after 4 hours of shaking at room temperature. The results of these experiments are presented in Table 3.

**Table 3 (Reference only): Effect of spacer on capacity of the support**

| **Activation procedure** | **Spacer** | **Capacity mg hIgG per g support** |
|---|---|---|
| Carbonyl Diimidazole | No spacer | 24 |
| | With nine-atom spacer | 47 |
| Reductive amination | No spacer | 34 |
| | With nine-atom spacer | 34 |

These results show that the use of a spacer is of particular advantage when using CDI activation.

### EXAMPLE 4 (REFERENCE ONLY): CAPACITY OF IMMUNOAFFINITY SUPPORTS WITH VARIOUS LIGANDS COMPARED TO COMMERCIAL AVAILABLE RESINS

To examine the applicability of the activated support, a variety of ligands were covalently coupled and tested for their capacity. The results were compared with those obtained when the ligands were coupled to a commercially available resin using similar activation chemistry.

For these experiments, antibodies against vitamin B 12, lactoferrin, aflatoxin B2 or aldosterone were coupled with reductive amination activated resins. For this reason a commercially available reductive amination activated resin and the resin produced under C.1.4.C was used. Coupling of antibodies was performed by dissolving 5-10 nmol of antibody in 4 ml of 0.1 M phosphate buffer pH 7, containing 150 mM of NaCl and 320 mg NaCNBH₃. This solution was allowed to react with 1 gram of activated support overnight at room temperature. The functionalized immunoaffinity resins thus obtained were tested for their dynamic capacity at 1 ml/min, thereby applying standards solutions of the corresponding antigens and measuring the breakthrough by means of HPLC. The results of these experiments are demonstrated in Table 4.

**Table 4 (Reference only): Absorption capacities of various immunoaffinity supports compared to those obtained with a commercial available support.**

| **Ligand** | **Capacity target analyte per gram C.1.4.c. (Ex 3) support** | **Capacity target analyte per gram commerical support** |
|---|---|---|
| Anti-vitamin B 12 | 800 ng | 1000 ng |
| Anti-lactoferrin | 60 µg | 70 µg |
| Anti-aflatoxin B2 | 620 ng | 520 ng |
| Anti-aldosterone | 310 ng | 200 ng |

As can be seen, the affinity resin of the invention demonstrates comparable capacities for the various analytes tested.

### EXAMPLE 5 (REFERENCE ONLY): EFFECT OF BUFFERS ON MS-COMPATABILITY AND IAC CAPACITY

Loading of immunoaffinity columns is generally performed with a phosphate buffered saline (PBS) solution. However, these buffers are not MS compatible. In order to investigate whether or not MS-compatible buffers (volatile buffers like formiate, acetate and carbonate based buffers) affect the performance of immunoaffinity solid phase supports, several immunoaffinity resins were tested on their capacity when using the traditional buffer and MS-compatible buffers. To this end, antibodies against aldosterone respectively acrylamide were coupled to a reductive amination activated resin (C.I.4.C.). Coupling of antibodies was performed by dissolving 5-10 nmol of antibody in 4 ml of 0.1 M phosphate buffer pH 7, containing 150 mM of NaCl and 320 mg NaCNBH₃ and this solution towards 1 gram of activated support. The reaction was allowed to proceed overnight at room temperature.

The immunoaffinity supports thus obtained were tested for their dynamic capacity at 1 ml/min, thereby applying standards solutions of the corresponding antigen absorption and measuring the breakthrough and elution of the captured analyte by means of HPLC, thereby using the buffer solutions mentioned in table 5. Furthermore, ion suppression measurements were done for the various investigated buffer solutions by replacing the UV-VIS detector by a MS detector.

**Table 5 Effect of composition of buffer solution on the capacity of the immunoaffinity support**

| **Loading buffer** | **Capacity target analyte Per g support** | **Ion suppression MS detector** |
|---|---|---|
| 10 mM sodium phosphate buffer pH 7,0 + 150 mM NaCl | 440 ng of aldosterone respectively | No measurements possible due to ion suppression |
| | 500 ng of acrylamide | |
| 100 mM ammonium formiate, pH 7.0 | 460 ng of aldosterone | No detectable ion suppression |
| 100 mM ammonium acetate, pH 7.0 | 450 ng of aldosterone | No detectable ion suppression |
| 10 mM ammonium carbonate, pH 7.0 | 560 ng of acrylamide | Not measured |

From these results it can be concluded that for these immunoaffinity resins no effect on the capacity was observed when replacing the traditional buffer solution by a volatile buffer solution. Application of a volatile buffer solutions clearly improves the ion suppression of the MS detector.

## Claims

1. A chromatographic resin suitable for use in high pressure affinity chromatography, the resin comprising a rigid organic polymer and the resin having a hydrophilic surface, **characterized in that** the hydrophilic surface is formed by a multiplicity of covalently bound small non-polymeric hydrophilic compounds having a molecular weight less than 1000 Dalton and wherein the resin does not contain a hydrophilic coating formed by a polymeric structure.

2. The resin according to claim 1, wherein the molecular weight of the non-polymeric hydrophilic compounds is less than 500 Dalton.

3. The resin according to claim 1 or 2, wherein the non-polymeric hydrophilic compound has 1-10 C-atoms.

4. The resin according to claim 3, wherein the small hydrophilic compound is of general formula CₙHₘ(Y)ₖ, wherein
n is an integer from 1 to 10, preferably 2 to 8,
m ≤ 2n
k ≤ 3n, and
Y is a hydrophilic moiety, preferably -OH or -COOH.

5. The resin according to any one of the preceding claims, wherein the non-polymeric hydrophilic compound is selected from the group consisting of ethanolamine, 3-amino-1,2-propanediol, N-(hydroxymethyl)acrylamide, 3-allyloxy-1,2,-propanediol, N-[Tris(hydroxymethyl)methyl]acrylamide and glycidol.

6. The resin according to any one of the preceding claims, wherein said organic polymer is selected from the group consisting of polyacrylamides, polyacrylates, polymethacrylates, polyvinyl, and polystyrene.

7. The resin according to any one of the preceding claims, further comprising one or more ligands attached to the rigid organic polymer via said at least one non-polymeric hydrophilic compound, preferably wherein said ligand is a biological or synthetic molecule, preferably a protein or peptide, such as an antibody.

8. A method for providing a chromatographic resin as defined in any one of claims 1 to 7, the method comprising the step of forming a non-polymeric hydrophilic surface by reacting a rigid organic polymer with at least one non-polymeric hydrophilic compound having a molecular weight less than 1000 Dalton.

9. Method according to claim 8 comprising, prior to reacting the polymer with the at least one hydrophilic compound, a step of activating said polymer, said hydrophilic compound, or both the polymer and the hydrophilic compound, to improve the reactivity between said polymer and said at least one hydrophilic compound.

10. Method according to claim 9, wherein said activating comprises providing the polymer and/or the hydrophilic compound with one or more reactive group(s), preferably selected from the group consisting of -NH₂, -OH and -CH=CH₂.

11. Method according to any one of claims 8-10, further comprising the step of reacting said chromatographic resin having a hydrophilic surface with at least one ligand to allow for covalent attachment of said at least one ligand to the resin via said at least one non-polymeric hydrophilic compound.

12. A chromatography column comprising a resin as defined in any one of claims 1-7.

13. An apparatus comprising a chromatography column as defined in claim 12 in fluid communication with an analytical system, preferably wherein said apparatus comprises a solid-phase extraction (SPE) system integrated with a liquid chromatography (LC) system, preferably a high pressure liquid chromatography (HPLC) system.

14. Apparatus according to claim 13, wherein said analytical system further comprises a mass spectrometer.

15. Use of a resin as defined in any one of claims 1-7 in an analytic method for analyzing a test sample comprising solid phase extraction, preferably wherein the method comprises mass spectroscopic (MS) detection of at least one analyte in the sample.

## Patentansprüche

1. Chromatographisches Harz, das zur Verwendung in Hochdruckaffinitätschromatographie geeignet ist, wobei das Harz ein starres organisches Polymer umfasst und das Harz eine hydrophile Oberfläche hat, **dadurch gekennzeichnet, dass** die hydrophile Oberfläche durch eine Multiplizität kovalent gebundener kleiner nicht-polymerer hydrophiler Verbindungen mit einem Molekulargewicht von kleiner als 1000 Dalton gebildet wird und wobei das Harz keine hydrophile Beschichtung, die durch eine polymere Struktur gebildet wird, enthält.

2. Harz gemäß Anspruch 1, wobei das Molekulargewicht der nicht-polymeren hydrophilen Verbindungen kleiner als 500 Dalton ist.

3. Harz gemäß Anspruch 1 oder 2, wobei die nicht-polymere hydrophile Verbindung 1-10 C-Atome hat.

4. Harz gemäß Anspruch 3, wobei die kleine hydrophile Verbindung die allgemeine Formel CₙHₘ(Y)ₖ hat, worin
n eine ganze Zahl von 1 bis 10, vorzugsweise 2 bis 8, ist,
m ≤ 2n,
k ≤ 3n und
Y eine hydrophile Gruppierung, vorzugsweise -OH oder -COOH ist.

5. Harz gemäß einem der vorangehenden Ansprüche, wobei die nicht-polymere hydrophile Verbindung ausgewählt ist aus der Gruppe, bestehend aus Ethanolamin, 3-Amino-1,2-propandiol, N-(Hydroxymethyl)acrylamid, 3-Allyloxy-1,2-propandiol, N-[Tris(hydroxymethyl)methyl]acrylamid und Glycidol.

6. Harz gemäß einem der vorangehenden Ansprüche, wobei das organische Polymer aus der Gruppe, bestehend aus Polyacrylamiden, Polyacrylaten, Polymethacrylaten, Polyvinyl und Polystyrol, ausgewählt ist.

7. Harz gemäß einem der vorangehenden Ansprüche, das außerdem einen oder mehrere Liganden umfasst, die über wenigstens eine nicht-polymere hydrophile Verbindung an das starre organische Polymer gebunden sind, wobei der Ligand vorzugsweise ein biologisches oder synthetisches Molekül, vorzugsweise ein Protein oder Peptid, zum Beispiel ein Antikörper, ist.

8. Verfahren zum Bereitstellen eines chromatographischen Harzes, wie es in einem der Ansprüche 1 bis 7 definiert ist, wobei das Verfahren den Schritt des Bildens einer nicht-polymeren hydrophilen Oberfläche durch Umsetzen eines starren organischen Polymers mit wenigstens einer nicht-polymeren hydrophilen Verbindung, die ein Molekulargewicht von kleiner als 1000 Dalton hat, umfasst.

9. Verfahren gemäß Anspruch 8, das vor Umsetzen des Polymers mit der wenigstens einen hydrophilen Verbindung einen Schritt der Aktivierung des Polymers, der hydrophilen Verbindung oder beider, des Polymers und der hydrophilen Verbindung, umfasst, um die Reaktivität zwischen dem Polymer und der wenigstens einen hydrophilen Verbindung zu verbessern.

10. Verfahren gemäß Anspruch 9, wobei die Aktivierung Ausstatten des Polymers und/oder der hydrophilen Verbindung mit einer reaktiven Gruppe oder mehreren reaktiven Gruppen, vorzugsweise ausgewählt aus der Gruppe, bestehend aus -NH₂,-OH und -CH=CH₂, umfasst.

11. Verfahren gemäß einem der Ansprüche 8 bis 10, das außerdem den Schritt des Umsetzens des chromatographischen Harzes, das eine hydrophile Oberfläche hat, mit wenigstens einem Liganden umfasst, um für eine kovalente Bindung des wenigstens einen Liganden an das Harz über die wenigstens eine nicht-polymere hydrophile Verbindung zu sorgen.

12. Chromatographiesäule, die ein Harz, wie es in einem der Ansprüche 1 bis 7 definiert ist, umfasst.

13. Apparatur, die eine Chromatographiesäule, wie sie in Anspruch 12 definiert ist, in Flüssigverbindung mit einem analytischen System umfasst, wobei die Apparatur vorzugsweise ein Festphasenextraktions(solid-phase extraction, SPE)-System integriert in ein Flüssigchromatographie (LC)-System, vorzugsweise ein Hochdruckflüssigchromatographie (HPLC)-System, umfasst.

14. Apparatur gemäß Anspruch 13, wobei das analytische System außerdem ein Massenspektrometer umfasst.

15. Verwendung eines Harzes, wie in einem der Ansprüche 1 bis 7 definiert, in einem analytischen Verfahren zum Analysieren einer Testprobe, das Festphasenextraktion umfasst, wobei das Verfahren vorzugsweise eine massenspektroskopische (MS) Detektion wenigstens eines Analyten in der Probe umfasst.

## Revendications

1. Résine chromatographique appropriée pour être utilisée en chromatographie d'affinité sous haute pression, laquelle résine comprend un polymère organique rigide et est dotée d'une surface hydrophile, **caractérisée en ce que** cette surface hydrophile est formée de multiples exemplaires de petit(s) composé(s) non-polymère(s) hydrophile(s) attachés par liaison covalente, dont la masse moléculaire est inférieure à 1000 daltons, étant entendu que la résine ne porte pas de revêtement hydrophile formé d'une structure polymère.

2. Résine conforme à la revendication 1, dans laquelle la masse moléculaire des composés non-polymères hydrophiles vaut moins de 500 daltons.

3. Résine conforme à la revendication 1 ou 2, dans laquelle le composé non-polymère hydrophile comporte 1 à 10 atomes de carbone.

4. Résine conforme à la revendication 3, dans laquelle le petit composé hydrophile a pour formule générale CₙHₘ(Y)ₖ, dans laquelle
- l'indice n est un nombre entier valant de 1 à 10, de préférence de 2 à 8,
- m ≤ 2n,
- k ≤ 3n,
- et Y représente une entité hydrophile, de préférence un groupe de formule -OH ou -COOH.

5. Résine conforme à l'une des revendications précédentes, dans laquelle le composé non-polymère hydrophile est choisi dans l'ensemble formé par les suivants : éthanolamine, 3-amino-propan-1,2-diol, N-(hydroxy-méthyl)-acrylamide, 3-allyloxy-propan-1,2-diol, N-[tris-(hydroxy-méthyl)-méthyl]-acrylamide, et glycidol.

6. Résine conforme à l'une des revendications précédentes, dans laquelle ledit polymère organique est choisi dans l'ensemble formé par les polyacrylamides, polyacrylates, polyméthacrylates, polyvinyliques et polystyrène.

7. Résine conforme à l'une des revendications précédentes, qui comprend en outre un ou plusieurs ligands attachés au polymère organique rigide par l'intermédiaire dudit composé non polymère hydrophile au nombre d'au moins un, étant entendu que de préférence, ledit ligand est une molécule biologique ou synthétique, de préférence une protéine ou un peptide, comme un anticorps.

8. Procédé de préparation d'une résine chromatographique définie dans l'une des revendications 1 à 7, lequel procédé comporte une étape consistant à former une surface hydrophile non-polymère en faisant réagir un polymère organique rigide avec au moins un composé non-polymère hydrophile dont la masse moléculaire vaut moins de 1000 daltons.

9. Procédé conforme à la revendication 8, comportant, avant la réaction du polymère et du composé hydrophile au nombre d'au moins un, une étape consistant à activer soit ledit polymère, soit ledit composé hydrophile, soit les deux, le polymère et le composé hydrophile, afin d'améliorer la réactivité l'un avec l'autre dudit polymère et dudit composé hydrophile au nombre d'au moins un.

10. Procédé conforme à la revendication 9, dans lequel ladite activation comporte le fait de munir le polymère et/ou le composé hydrophile d'un ou de plusieurs groupe(s) réactif(s), de préférence choisi(s) dans l'ensemble constitué par les groupes de formules -NH₂, -OH et -CH=CH₂.

11. Procédé conforme à l'une des revendications 8 à 10, qui comporte en outre une étape consistant à faire réagir ladite résine chromatographique dotée d'une surface hydrophile avec au moins un ligand, de manière à permettre audit ligand au nombre d'au moins un de s'attacher à la résine par liaison covalente, par l'intermédiaire dudit composé non-polymère hydrophile au nombre d'au moins un.

12. Colonne de chromatographie comprenant une résine conforme à l'une des revendications 1 à 7.

13. Appareillage comprenant une colonne de chromatographie, conforme à la revendication 12, en communication fluidique avec un système analytique, lequel appareillage comprend de préférence un système d'extraction sur phase solide (SPE), intégré avec un système de chromatographie en phase liquide (CL), qui est de préférence un système de chromatographie en phase liquide haute pression (CLHP).

14. Appareillage conforme à la revendication 13, dans lequel ledit système analytique comprend en outre un spectromètre de masse.

15. Utilisation d'une résine conforme à l'une des revendications 1 à 7 dans un procédé d'analyse visant à analyser un échantillon de test et comportant une opération d'extraction sur phase solide, le procédé comportant de préférence la détection par spectrométrie de masse (SM) d'au moins un analyte dans l'échantillon.
